# EUROPÄISCHE PATENTSCHRIFT

(11) **EP 2 242 712 B1**
(45) Veröffentlichungstag und Bekanntmachung des Hinweises auf die Patenterteilung: **08.08.2012**
(21) Anmeldenummer: 09713278.1
(22) Anmeldetag: 27.01.2009
(51) Int. Cl.: B65G 49/04

(54) **HÄNGEBAHNSYSTEM UND TAUCHBEHANDLUNGSANLAGE MIT EINEM SOLCHEN**
OVERHEAD CONVEYOR SYSTEM AND DIP COATING LINE COMPRISING SAID SYSTEM
SYSTÈME DE CONVOYEUR AÉRIEN ET INSTALLATION DE TRAITEMENT PAR IMMERSION ÉQUIPÉE D'UN SYSTÈME DE CE TYPE

(30) Priorität: 21.02.2008 DE 102008010401
(43) Veröffentlichungstag der Anmeldung: 27.10.2010
(73) Patentinhaber: Eisenmann AG, 71032 Böblingen (DE)
(72) Erfinder: ROBBIN, Jörg, 72119 Pfäffingen (DE)
(74) Vertreter: Heinrich, Hanjo
(86) Internationale Anmeldenummer: PCT/EP2009/000496
(87) Internationale Veröffentlichungsnummer: WO 2009/103400

(56) Entgegenhaltungen:
- EP-A- 1 547 947
- EP-A- 1 741 646
- DE-A1- 4 326 563
- DE-U1- 9 408 846
- DE-U1- 9 408 847
- GB-A- 2 217 348
- GB-A- 2 224 252
- GB-A- 2 233 622
- US-A1- 2007 212 941

## Beschreibung

Die Erfindung betrifft ein Hängebahnsystem zum Transport von Gegenständen, insbesondere zum Transport von Fahrzeugkarosserien in einer Behandlungsanlage mit
a) mindestens einem Transportwagen, welcher eine Befestigungseinrichtung umfasst, an welcher wenigstens ein Gegenstand befestigbar ist;
b) mindestens einer den Transportwagen tragenden Schiene;
c) mindestens einem Antriebsmittel zum Verfahren des Transportwagens entlang der Schiene;
   wobei
d) die Befestigungseinrichtung stets unterhalb der Schiene angeordnet ist;
e) der Transportwagen derart eingerichtet ist, dass die Befestigungseinrichtung wenigstens entlang eines Abschnitts der Schiene seitlich gegenüber der Schiene versetzt förderbar ist;
f) die Befestigungseinrichtung eine Tragstruktur mit Befestigungsmitteln umfasst, welche lediglich über eine Seitenfläche von einem weiteren Bauteil des Transportwagens getragen ist.

Außerdem betrifft die Erfindung eine Tauchbehandlungsanlage mit
a) mindestens einem Tauchbecken, welches mit einer Behandlungsflüssigkeit füllbar ist, in welcher zu behandelnde Gegenstände, insbesondere Fahrzeugkarosserien, eingetaucht werden können;
b) einer Förderanlage, welche die zu behandelnden Gegenstände an das Tauchbecken heran, in den Innenraum des Tauchbeckens hinein, aus dem Tauchbecken heraus und von diesem wegbewegen kann.

Nachstehend wird der Begriff "unterhalb" verwendet, wenn ein Bauteil im Vergleich zu einem weiteren Bauteil niedriger angeordnet ist. Dies bedeutet nicht, dass das niedriger angeordnete Bauteil in vertikaler Richtung mit dem höher angeordneten Bauteil überlappen muss. Dieser Zustand wird nachstehend durch den Begriff "unter" ausgedrückt. Die Begriffe "oberhalb" und "über" werden entsprechend für ein Bauteil verwendet, welches im Vergleich zu einem weiteren Bauteil höher angeordnet ist.

Bei einem in der US 6 571 970 B1 beschriebenen Hängebahnsystem und bei anderen vom Markt her bekannten Hängebahnsystemen, wie sie in Tauchbehandlungsanlagen, insbesondere in Tauchlackieranlagen, für Fahrzeugkarosserien eingesetzt werden, ist die Befestigungseinrichtung unter der Schiene angeordnet, auf welcher der Transportwagen abläuft, wobei die Befestigungseinrichtung bei der US 6 571 970 B1 mittels einer Teleskopeinrichtung in vertikaler Richtung verfahrbar ist.

Die Antriebsmittel, die beispielsweise einen Antriebswagen und ggfs. noch weitere Komponenten umfassen, die zur Förderung des Transportwagens entlang der Schiene notwendig sind, befinden sich meist in enger Nachbarschaft zu der Schiene. Wenn nun eine Fahrzeugkarosserie an der Befestigungseinrichtung befestigt ist, so befindet sich auch die Fahrzeugkarosserie unter der Schiene, den Antriebswagen und den ggfs. vorhandenen weiteren Förderkomponenten.

Bevor eine Fahrzeugkarosserie einem mit flüssigem Lack gefüllten Tauchbecken zugeführt wird, wird ein verhältnismäßig aufwendiger Reinigungsprozess durchgeführt, in welchem die Fahrzeugkarosserie gereinigt, entfettet usw. wurde. Es kann nun vorkommen, dass von oberhalb der zu behandelnden Gegenstände Schmutzpartikel, Öl oder sonstige Verunreinigungen von den angesprochenen Förderkomponenten nach unten fallen. In diesem Fall können die Verunreinigungen auf der Fahrzeugkarosserie landen, was das Ergebnis des Reinigungsprozesses verschlechtert und zu einer qualitativ minderwertigeren Lackierung führen kann.

Auch bei dem Reinigungsvorgang selbst, bei welchem die Fahrzeugkarosserie ebenfalls mit einem Hängebahnsystem gefördert werden kann, sind von über der Fahrzeugkarosserie befindlichen Teilen herabfallende Schmutzpartikel unerwünscht.

Eine die Fahrzeugkarosserie oder andere zu behandelnde Gegenstände schützende Abdeckung, die entlang des Förderweges der Fahrzeugkarosserie über diesem angeordnet ist, ist baulich recht aufwändig und zudem teuer.

Bei einem aus der EP 1 547 947 A1 bekannten gattungsgemäßen Hängebahnsystem der eingangs genannten Art werden Fahrzeugkarosserien auf einer Befestigungseinrichtung gefördert, die seitlich gegenüber der Schiene versetzt förderbar ist. Dadurch ist die Gefahr verringert, dass damit transportierte Gegenstände mit Verunreinigungen in Kontakt kommt, welche von oberhalb der zu transportierenden Gegenstände angeordneten Bauteilen herabfallen, wobei der apparative Aufwand dazu möglichst gering ist. Auf diese Weise kann der Raum über der Befestigungseinrichtung und auch der Raum über dem daran befestigten Gegenstand in der Hinsicht freigehalten werden, dass dort insbesondere keine zum Fördern des Tansportwagens notwendigen Komponenten angeordnet sind.

Dadurch, dass die Befestigungseinrichtung eine Tragstruktur mit Befestigungsmitteln umfasst, welche lediglich über eine Seitenfläche von einem weiteren Bauteil des Transportwagens getragen ist. Im Gegensatz zu bekannten Hängebahnsystemen, bei denen die Befestigungseinrichtung mit einem über und oberhalb der Befestigungseinrichtung verlaufenden Bügel gehalten ist, erfolgt die Befestigung der Befestigungseinrichtung an der Tragstruktur nur von einer Seite. Somit sind auch keine die Befestigungseinrichtung haltenden Komponenten des Transportwagens über der Befestigungseinrichtung angeordnet.

Die Befestigungseinrichtung ist bei der Hängebahn gemäß der EP 1 547 947 A1 nach Art einer Parallelogrammführung ausgebildet und an zwei Stellen seitlich gelagert. Hierdurch kann die Fahrzeugkarosserie nur über einen eingeschränkten Winkelbereich um eine horizontale Achse verschwenkt werden.

Es ist Aufgabe der Erfindung, ein Hängebahnsystem der eingangs genannten Art zu schaffen, welches diesen Gedanken Rechnung trägt, und die Beweglichkeit des Gegenstandes zu erhöhen.

Diese Aufgabe wird bei einem Hängebahnsystem der eingangs genannten Art dadurch gelöst, dass
g) die Tragstruktur über einen antreibbaren Drehzapfen um eine horizontale Drehachse verdrehbar an dem weiteren Bauteil des Transportwagens gelagert ist.

Auf diese Weise kann ein Bewegungsablauf für den Gegenstand erzielt werden, welcher eine Überlagerung aus einer horizontalen Linearbewegung und einer Drehbewegung um die horizontale Drehachse ist. Dies bedeutet nicht, dass die Bewegung des Gegenstandes stets durch eine solche Überlagerung vorgegeben ist. Auch nur eine horizontale Linearbewegung oder nur eine Drehung um die horizontale Drehachse sind möglich. Darüber hinaus kann die Drehachse auf diese Weise sehr nahe am Schwerpunkt des Gegenstandes angeordnet sein, was im Hinblick auf die Kräfte günstig ist, welche bei der Drehung des Gegenstandes auf den Transportwagen wirken.

Um die Zahl der Bewegungsfreiheitsgrade für den Gegenstand zu erhöhen, ist es günstig, wenn das weitere Bauteil des Transportwagens, welches die Tragstruktur trägt, ein vertikal verfahrbarer Schlitten ist. Auf diese Weise kann der Gegenstand auch in einer vertikalen Linearbewegung verfahren werden.

Baulich ist es günstig, wenn der Schlitten mittels einer in vertikaler Richtung ein- oder ausfahrbaren Teleskopeinrichtung vertikal verfahrbar ist. Diese kann den vertikal verfahrbaren Schlitten tragen oder letzterer kann selbst ein bewegliches Teil der Teleskopeinrichtung sein. Bei dieser Ausbildung kann der Transportwagen im Wesentlichen wie ein L-Bügel ausgebildet sein, wobei die Befestigungseinrichtung den kurzen horizontalen Balken und die Teleskopeinrichtung in etwa den langen vertikalen Balken des "L" vorgeben. Wenn keine vertikale Bewegung erwünscht oder erforderlich ist, kann anstelle der Teleskopeinrichtung auch eine starre Verbindung vorgesehen sein.

Zur weiteren Erhöhung der Bewegungsfreiheitsgrade für den Gegenstand ist es vorteilhaft, wenn die Befestigungseinrichtung um eine vertikale Drehachse verdrehbar gelagert ist. Die genannten Bewegungsfreiheitsgrade sind insbesondere dann vorteilhaft, wenn der Gegenstand in einer Tauchbehandlungsanlage durch ein Tauchbecken geführt werden soll.

Wenn der Transportwagen als Antriebsmittel einen an der Schiene motorisch verfahrbaren Antriebswagen umfasst, können bekannte Komponenten von Hängebahnsystemen verwendet werden, deren Gebrauch bereits bekannt ist und sich bewährt hat.

Bei Verwendung der Teleskopeinrichtung ist es vorteilhaft, wenn die Teleskopeinrichtung um die vertikale Drehachse verdrehbar an dem Antriebswagen des Transportwagens gelagert ist. Auf diese Weise kann der Transportwagen insgesamt verhältnismäßig kompakt gehalten werden und dennoch eine große Zahl möglicher Bewegungsfreiheitsgrade für den Gegenstand bieten.

Da der Gegenstand von dem an der Schiene hängenden Transportwagen seitlich neben der Schiene geführt wird, besteht für den Transportwagen die Gefahr eines Verkippens in eine horizontale Richtung auf die Schiene zu, was hauptsächlich durch eine durch den Gegenstand bewirkte Kraft in horizontaler Richtung verursacht wird. Daher ist es günstig, wenn entsprechende Sicherungsmittel vorgesehen sind, welche den Transportwagen gegen ein Verkippen um eine zur Schiene parallele Kippachse sichern.

Dazu können die Sicherungsmittel eine parallel zur und unterhalb der Schiene angeordnete Stützstruktur umfassen, an welcher sich der Tragwagen abstützt.

Die Sicherungsmittel können vorteilhaft in der Art ausgebildet sein, dass sie eine am Transportwagen angebrachte, um eine vertikale Drehachse verdrehbare Führungsrolle umfassen, welche in einer dazu komplementären Führungsschiene geführt ist, wobei die Führungsschiene unterhalb der Antriebsschiene parallel zu dieser verläuft.

Aufgabe der Erfindung ist es außerdem, eine Tauchbehandlungsanlage der eingangs genannten Art zu schaffen, welche den oben im Hinblick auf das Hängebahnsystem genannten Gedanken Rechnung trägt.

Diese Aufgabe wird bei einer Tauchbehandlungsanlage der eingangs genannten Art dadurch gelöst, dass
c) die Förderanlage das Hängebahnsystem nach einem der Ansprüche 1 bis 9 ist.

Die dadurch erzielten Vorteile entsprechen den oben zum Hängebahnsystem genannten Vorteilen.

Ausführungsbeispiele der Erfindung werden nachstehend anhand der beigefügten Zeichnungen näher erläutert. In diesen zeigen:
Figur 1 in einer Seitenansicht eine kataphoretische Tauchlackieranlage für Fahrzeugkarosserien;
Figuren 2 und 3 perspektivisch aus unterschiedlichen Blickrichtungen einen Transportwagen mit einem Teleskoparm, wie er zur Förderung der zu lackierenden Fahrzeugkarosserien bei der Tauchlackieranlage von Figur 1 eingesetzt wird, während des Rückführvorganges vom Ausgang der Anlage zu deren Eingang;
Figur 4 perspektivisch und in größerem Maßstab eine Detailansicht eines Antriebswagens des Transportwagens, wie er bei der kataphoretischen Tauchlackieranlage von Figur 1 eingesetzt wird, wobei ein Mechanismus zum Drehen des Teleskoparms gezeigt ist;
Figuren 5 und 6 perspektivisch und in größerem Maßstab eine Detailansicht aus unterschiedlichen Blickrichtungen einer Seitenführung des Teleskoparms;
Figur 7 perspektivisch eine Detailansicht in größerem Maßstab einer Befestigungseinrichtung des Transportwagens, wie er bei der Tauchlackieranlage von Figur 1 eingesetzt wird;
Figuren 8A bis 8E verschiedene Ansichten eines ersten Ausführungsbeispiels des Teleskoparms, wie er beim Transportwagen der kataphoretischen Tauchlackieranlage von Figur 1 eingesetzt wird, Figuren 9A bis 9E verschiedene Ansichten eines zweiten Ausführungsbeispiels des Teleskoparms, wie er bei dem Transportwagen der kataphoretischen Tauchlackieranlage von Figur 1 eingesetzt wird;
Figuren 10 bis 18 perspektivisch verschiedene Phasen beim Eintauchen einer Fahrzeugkarosserie in das Tauchbecken der kataphoretischen Tauchlackieranlage von Figur 1.

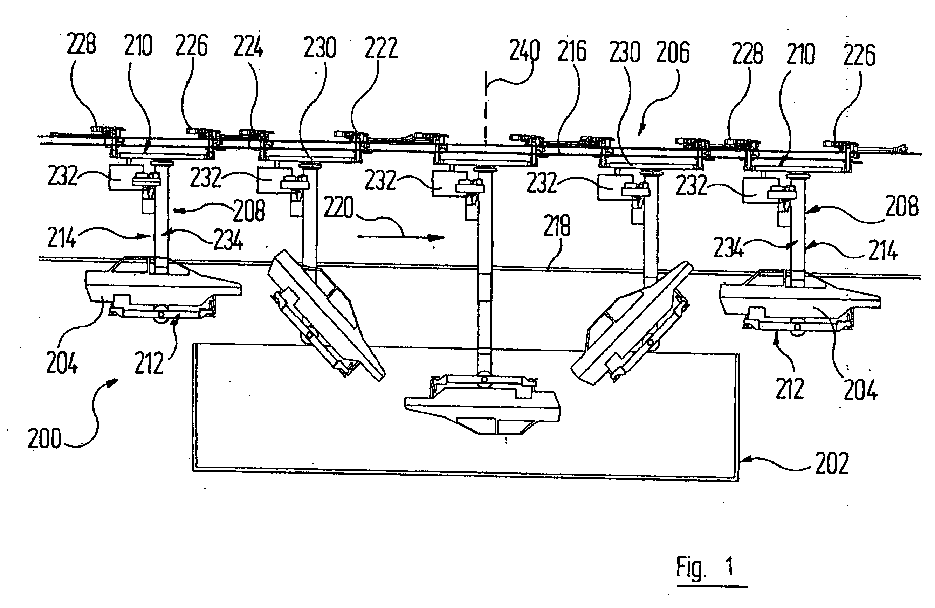

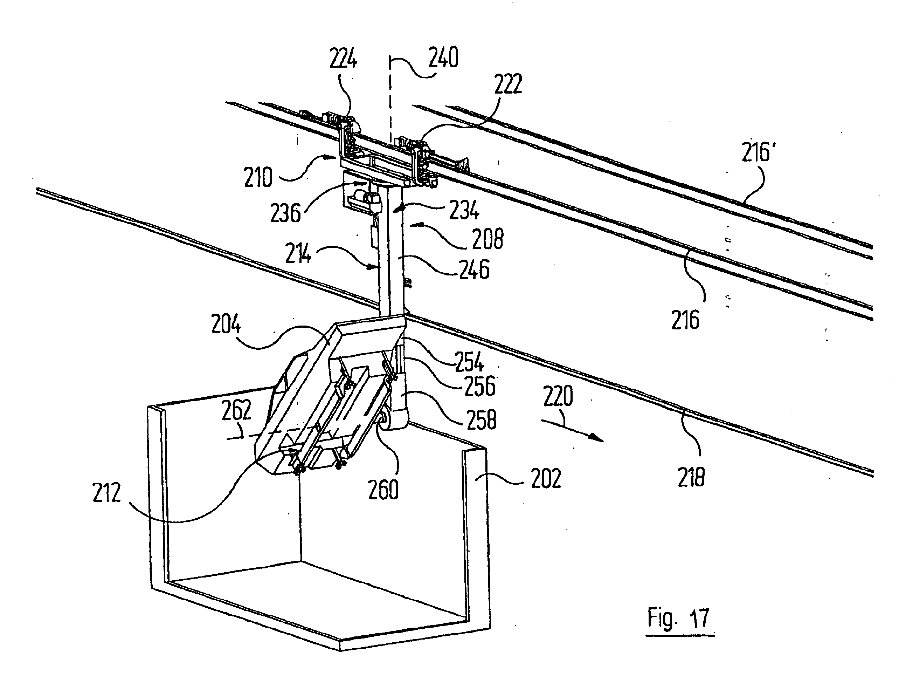

In den Figuren 1 bis 18 ist eine kataphoretische Tauchlackieranlage 200 dargestellt. Diese umfasst ein mit flüssigem Lack gefülltes Tauchbecken 202. Farbpartikel wandern in einem elektrischen Feld, das sich zwischen Fahrzeugkarosserien 204 und Anoden ausbildet, die entlang des Bewegungsweges der Fahrzeugkarosserien 204 angeordnet und aus Übersichtlichkeitsgründen nicht dargestellt sind, auf die Fahrzeugkarosserien 204 zu und werden an diesen abgeschieden.

Die Fahrzeugkarosserien 204 werden mit Hilfe eines Fördersystems 206 durch die Anlage und insbesondere durch das Tauchbecken 202 und den darin befindlichen Lack geführt. Das Fördersystem 206 umfasst eine Vielzahl von Transportwagen 208, die ihrerseits einen Antriebswagen 210 und einen Tragwagen 212 aufweisen, welche über eine weiter unten noch im Detail erläuterte Teleskopeinrichtung 214 miteinander gekoppelt sind.

Über dem Tauchbecken 202 erstreckt sich eine Antriebsschiene 216 mit einem I-Profil, wie sie bei herkömmlichen Elektrohängebahnen eingesetzt wird. Unterhalb der Antriebsschiene 216 und oberhalb des Tauchbeckens 202 verläuft parallel zur Antriebsschiene 216 eine Führungsschiene 218 mit einem nach oben offenen U-Profil.

Die Bewegungsrichtung, in welcher die Fahrzeugkarosserien 204 mittels des Fördersystems 206 gefördert werden, ist in Figur 1 durch einen Pfeil 220 dargestellt. Die Antriebsschiene 216 und die Führungsschiene 218 sind bezogen auf die Mitte des Tauchbeckens 202 in Richtung senkrecht zur Bewegungsrichtung 220 nach außen versetzt, wobei die Führungsschiene 218 weiter außen verläuft als die Antriebschiene 216.

Bei den Antriebswagen 210 handelt es sich im Grundsatz um eine Konstruktion, die von herkömmlichen Elektrohängebahnen her bekannt ist. Jeder dieser Antriebswagen 210 besitzt ein in Bewegungsrichtung 220 vorauseilendes Fahrwerk 222, in der Fachsprache "Vorläufer" genannt, sowie ein in Bewegungsrichtung 220 nacheilendes weiteres Fahrwerk 224, welches in der Fachsprache "Nachläufer" genannt wird. Vorläufer 222 und Nachläufer 224 sind in bekannter Weise mit Führungs- und Tragrollen ausgestattet, die hier nicht eigens mit einem Bezugszeichen versehen sind und an verschiedenen Flächen des I-förmigen Profils der Antriebsschiene 216 abrollen. Mindestens eine der Rollen des Vorläufers 222 bzw. des Nachläufers 224 dient als Antriebsrolle und ist hierzu durch einen Elektromotor 226 bzw. 228 drehbar. Gegebenenfalls kann es ausreichen, wenn lediglich der Vorläufer 222 angetrieben ist. Der über den Antriebswagen 210 angetriebene Transportwagen 208 kann gegebenenfalls auch Steigungen überwinden, wenn die Antriebsschiene 216 in bestimmten Bereichen geneigt verlaufen muss, um den Förderweg an örtliche Gegebenheiten anzupassen.

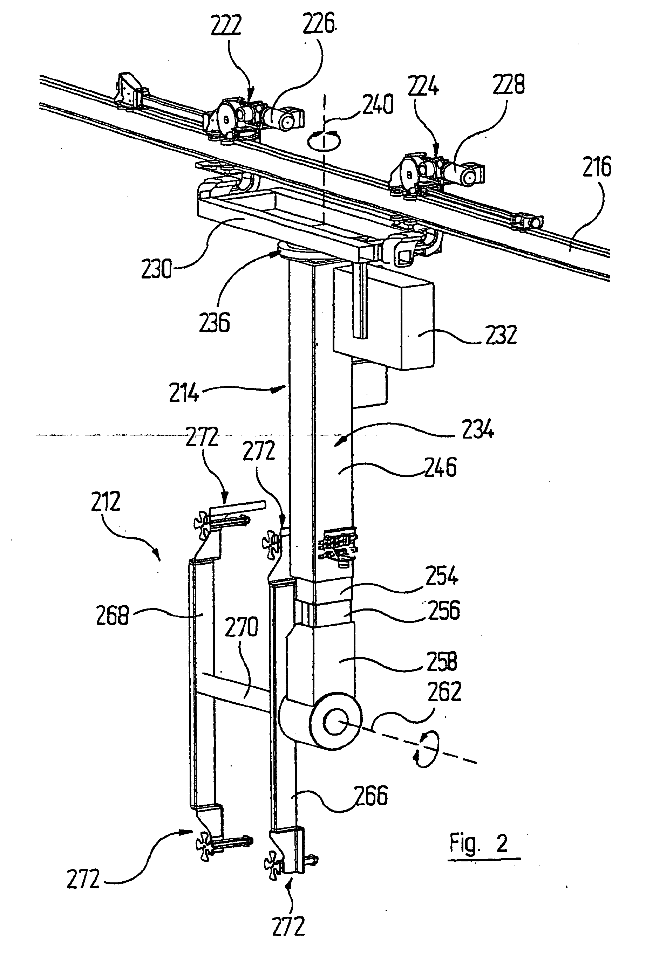

Vorläufer 222 und Nachläufer 224 jedes Antriebswagens 210 sind durch einen Verbindungsrahmen 230 miteinander verbunden, der insbesondere in den Figuren 2 bis 4 gut zu erkennen ist.

Der Verbindungsrahmen 230 trägt wiederum in bekannter Weise eine Steuereinrichtung 232, welche mit der zentralen Steuerung der Tauchlackieranlage 200 und ggfs. mit den Steuereinrichtungen 232 der anderen in der Tauchlackieranlage 200 vorhandenen Antriebswagen 210 kommunizieren kann. Auf diese Weise ist eine weitgehend unabhängige Bewegung der verschiedenen Transportwagen 208 möglich.

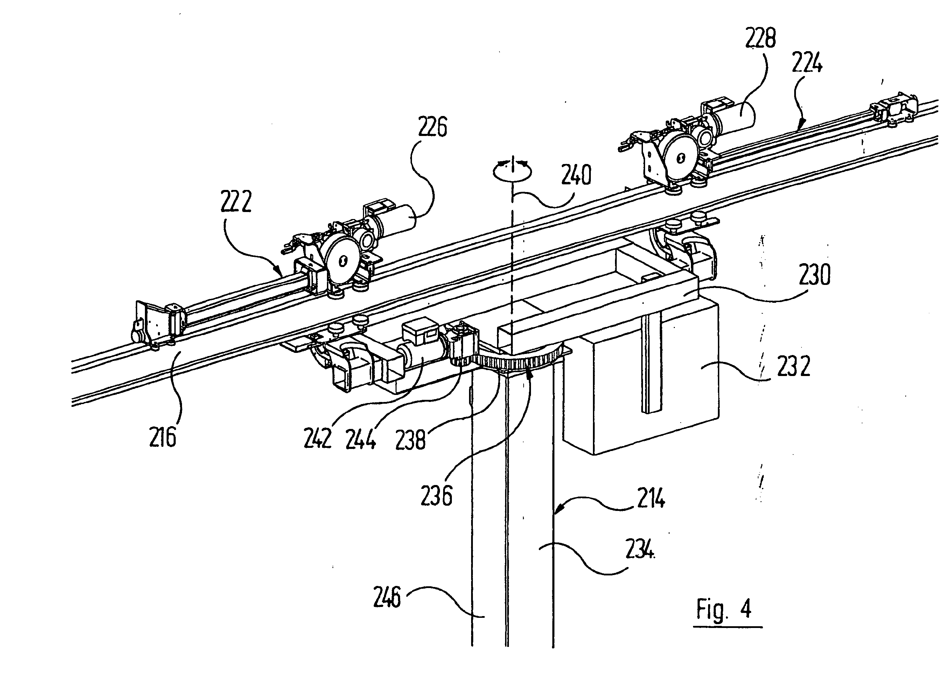

Die Teleskopeinrichtung 214, welche den Antriebswagen 210 mit dem Tragwagen 212 koppelt, umfasst einen dreigliedrigen vertikal verlaufenden Teleskoparm 234, welcher in seiner Länge veränderbar ist. Dieser ist an seinem oberen Ende stirnseitig drehfest mit einem Zahnrad 236 mit einer Außenverzahnung 238 verbunden, so dass die Längsachse des Teleskoparms 234 und die Drehachse 240 des Zahnrads 236 (vgl. Figur 4) zusammenfallen oder zumindest dicht beieinander liegen. Das Zahnrad 236 ist seinerseits etwa mittig zwischen dem Vorläufer 222 und dem Nachläufer 224 drehbar an dem Verbindungsrahmen 230 so gelagert, dass die Drehachse 240 vertikal verläuft.

Das Zahnrad 236 kann mittels eines mit der Steuereinrichtung 232 des Antriebswagens 210 kommunizierenden Stellmotors 242 angetrieben werden, welcher dazu ein in die Außenverzahnung 238 des Zahnrads 236 eingreifendes Zahnrad 244 antreibt. Somit kann der Teleskoparm 234 um die Drehachse 240 je nach Drehrichtung des Ritzels 244 sowohl im Uhrzeigersinn als auch gegen den Uhrzeigersinn verdreht werden.

Der Stellmotor 242 und das Ritzel 244 sind der Übersichtlichkeit halber lediglich in Figur 4 gezeigt, wozu der Verbindungsrahmen 230 dort teilweise weggebrochen ist.

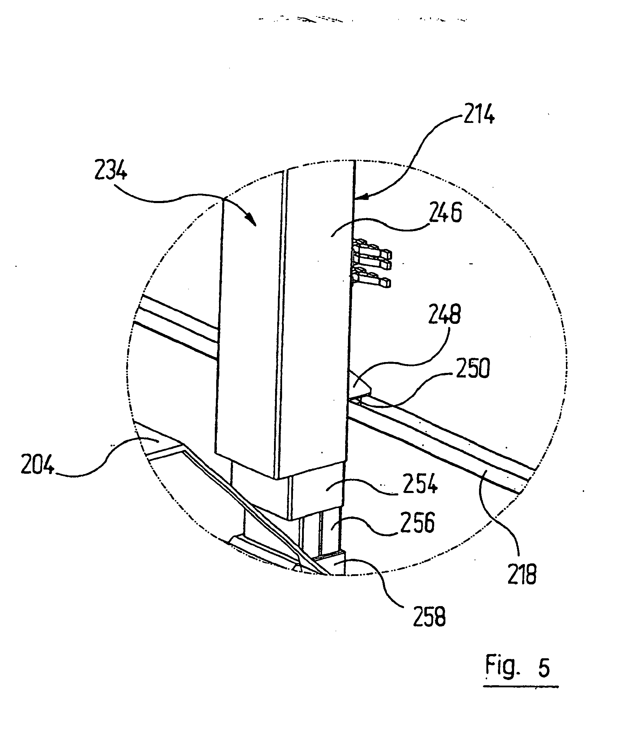

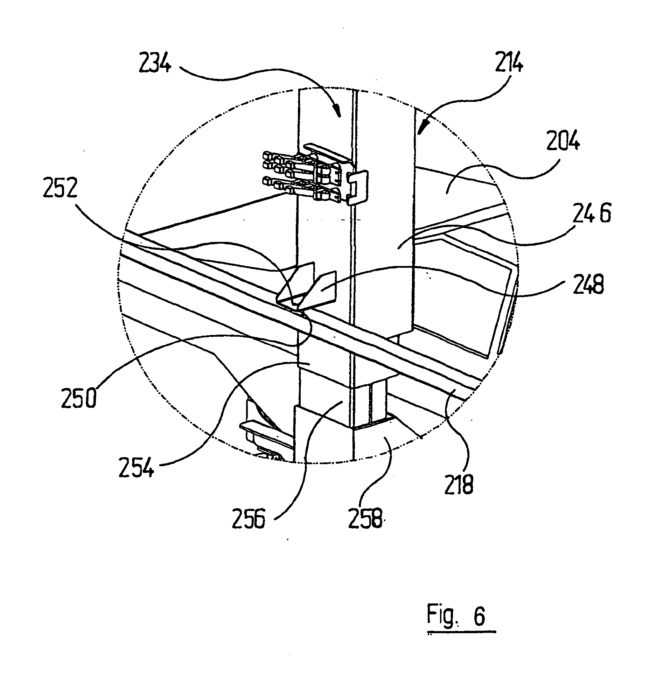

Der Teleskoparm 234 umfasst ein oberes Teleskopglied 246. Dieses trägt an seinem vom Zahnrad 236 abliegenden Ende an einem Querträger 248 eine Führungsrolle 250, welche frei um eine vertikale Drehachse 252 verdrehbar ist und in dem U-Profil der Führungsschiene 218 läuft, was insbesondere in den Figuren 5 und 6 zu erkennen ist. Auf diese Weise ist ein Verkippen des Teleskoparms 234 aus der Vertikalen in einer senkrecht auf die Bewegungsrichtung 220 stehenden Ebene verhindert.

Der Teleskoparm 234 umfasst neben dem oberen Teleskopglied 246 ein mittleres Teleskopglied 254 sowie ein unteres Teleskopglied 256. Die Teleskopglieder 246, 254 und 256 sind relativ zueinander verschiebbar, worauf weiter unten nochmals näher eingegangen wird.

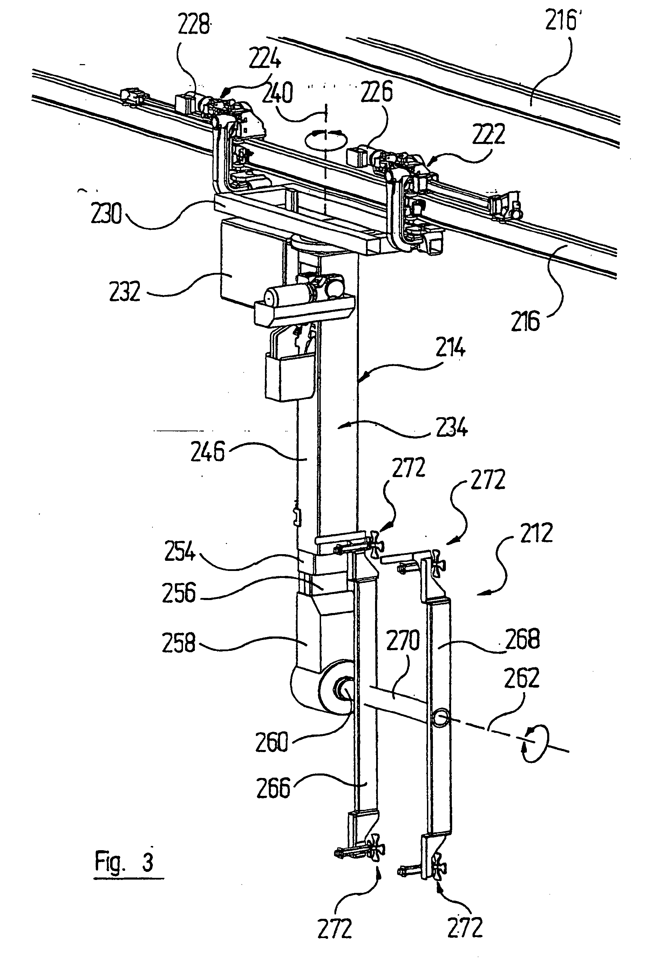

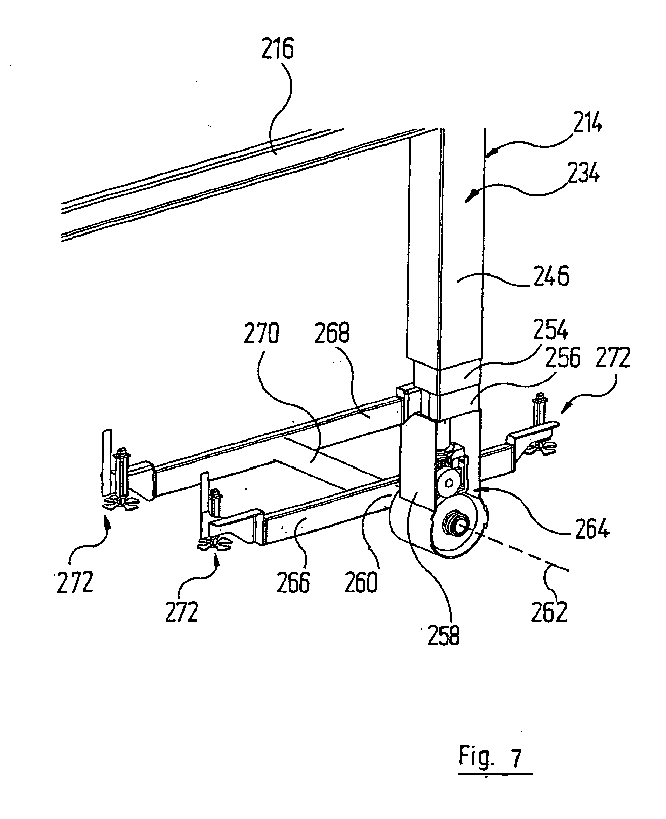

Das untere Teleskopglied 256 dient als in dem mittleren Teleskopglied 254 verfahrbarer Schlitten 256 und wird nachstehend als solcher bezeichnet. Am unteren freien Endbereich 258 des Schlittens 256 ist ein Drehzapfen 260 gelagert. Dieser definiert eine in den Figuren 2 und 3 gezeigte horizontale Drehachse 262. Der Drehzapfen 260 kann über einen von dem Schlitten 256 in seinem unteren Endbereich 258 mitgeführten Getriebemotor 264 (vgl. Figur 7, Abdeckung entfernt), welcher mit der Steuereinrichtung 232 des Transportwagen 208 kommuniziert, in beide Drehrichtungen um die Drehachse 262 verdreht werden.

Wie insbesondere in den Figuren 2, 3 und 7 gut zu erkennen ist, weist der Tragwagen 212 zwei als Hohlprofil ausgebildete und parallel zueinander verlaufende Längsholme 266 und 268 mit rechteckigem Querschnitt auf, welche mittig durch eine Quertraverse 270 mit kreisförmigen Querschnitt verbunden sind. Der Drehzapfen 260 des Schlittens 256 ist drehfest mit der Außenfläche des Längsholms 266 des Tragwagens 212 verbunden, wobei der Drehzapfen 260 und der Querholm 270 des Tragwagens 212 koaxial zueinander verlaufen. An den Stirnseiten der Längsholme 266 und 268 sind Befestigungsmittel 272 angebracht, mittels welchen eine zu lackierende Fahrzeugkarosserie 204 in an und für sich bekannter Weise an dem Tragwagen 212 lösbar befestigt werden kann.

Der Schlitten 256 trägt den Tragwagen 212 über den Drehzapfen 260 somit nur an einer Seite, so dass der Transportwagen 208 insgesamt als L-förmiger Bügel ausgebildet ist. Der Transportwagen 208 kann während seiner Bewegung entlang der Antriebsschiene 216 so ausgerichtet sein, dass der Tragwagen 212 mit den Befestigungsmitteln 272 seitlich gegenüber der Antriebschiene 216 versetzt angeordnet ist. Dadurch kann sichergestellt werden, dass keine Komponente des Fördersystems 206, z.B. unter anderem die Antriebsschiene 216 oder der Antriebswagen 210, in dem Raum senkrecht über dem Tragwagen 212 mit den Befestigungsmitteln 272 angeordnet ist. Die Gefahr einer Verunreinigung der Fahrzeugkarosserie 204 durch von Komponenten des Fördersystems 206 herabfallenden Schmutz, wie z.B. Staub, Öl oder dergleichen, ist somit verringert.

Wie oben erwähnt, können die Teleskopglieder 246, 254 und 256 des Teleskoparms 234 relativ zueinander bewegt werden. Dazu sind die Querschnitte der einzelnen Teleskopglieder 246, 254 und 256 derart komplementär zueinander ausgebildet, dass das mittlere Teleskopglied 254 in dem oberen Teleskopglied 246 und der Schlitten 256 in dem mittleren Teleskopglied 254 geführt verschoben werden kann.

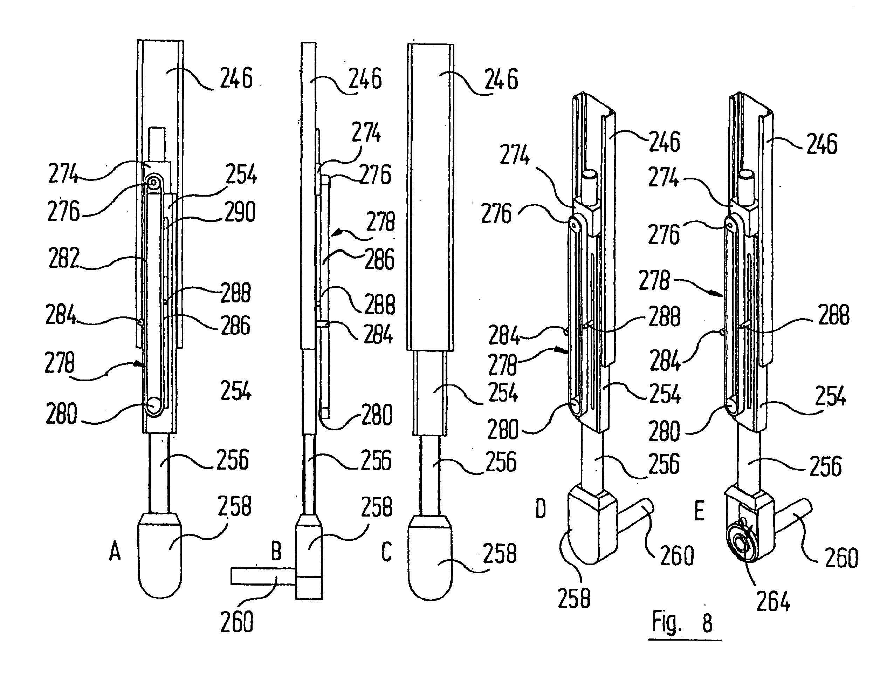

Bei einem in Figur 8 in teilweise weggebrochenen Ansichten gezeigten ersten Ausführungsbeispiel des Teleskoparms 234 trägt das mittlere Teleskopglied 254 stirnseitig an seinem oberen Ende, welches sich stets innerhalb des oberen Teleskopglieds 246 befindet, einen Stellmotor 274, welcher mit der Steuereinrichtung 232 des Transportwagens 208 kommuniziert und ein Antriebsritzel 276 in zwei Drehrichtungen antreiben kann. Eine Kette 278 läuft sowohl über das Antriebsritzel 276 des Stellmotors 274 als auch über ein Umlaufritzel 280, welches am unteren Ende des mittleren Teleskopglieds 254 gelagert ist, welches aus dem oberen Teleskopglied 246 nach unten herausragt. Die Kette 278 ist an ihrem in Figur 8A linken Trum 282 mit einem Verbindungsbolzen 284 verbunden, welcher seinerseits unbeweglich an dem oberen Teleskopglieds 246 angebracht ist. Das gegenüberliegende zweite Trum 286 der Kette 278 ist mit einem Verbindungsbolzen 288 gekoppelt, welcher seinerseits unbeweglich mit dem Schlitten 256 des Teleskoparms 234 verbunden ist. Der Verbindungsbolzen 288 des Schlittens 256 läuft in einem Schlitz 290, der in einer Seitenwand des mittleren Teleskopglieds 254 vorgesehen ist, wogegen der Verbindungsbolzen 278 des oberen Teleskopglieds 246 seitlich an dem mittleren Teleskopglied 254 vorbeigeführt ist.

Wird nun der Stellmotor 274 derart von der Steuereinrichtung 232 des Transportwagens 208 angesteuert, dass sich das Antriebsritzel 276 in Figur 8A im Uhrzeigersinn verdreht, so wird der mit dem Schlitten 256 gekoppelte Verbindungsbolzen 288 von der Kette 278 nach unten mitgenommen, so dass sich das Schlittens 256 aus dem mittleren Teleskopglied 254 herausschiebt. Gleichzeitig wird das mittlere Teleskopglied 254 aufgrund des unbeweglichen und am oberen Teleskopglied 246 befestigten Verbindungsbolzen 284 aus dem oberen Teleskopglied 246 heraus geschoben. Auf diese Weise wird der Teleskoparm 236 insgesamt ausgefahren. Der Teleskoparm 234 kann wieder eingefahren werden, indem das Antriebsritzel 276 durch den Stellmotor 274 derart verdreht wird, dass es sich in Figur 8A entgegen dem Uhrzeigersinn bewegt.

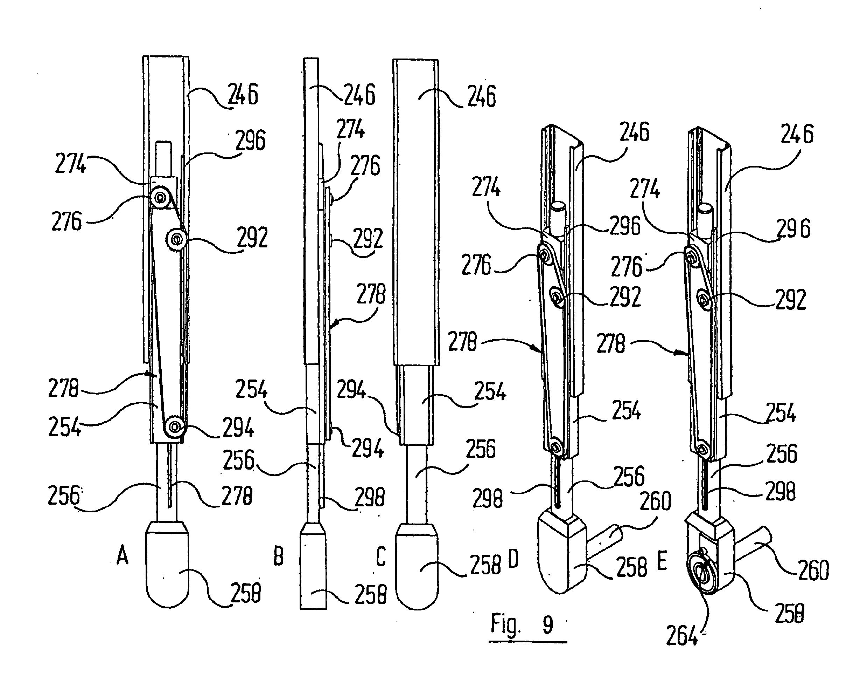

Eine alternative Ausbildung des Teleskoparms 234 ist in Figur 9 in teilweise weggebrochenen Ansichten gezeigt. Dort läuft die Kette 278 über das Antriebsritzel 276 des Stellmotors 274 sowie über ein erstes Koppelritzel 292 und ein zweites Koppelritzel 294 ab. Die Koppelritzel 292 und 294 tragen koaxial jeweils ein Stirnrad, welche in den Ansichten der Figur 9 nicht zu erkennen sind. Die Außenverzahnung des Stirnrads am Koppelritzel 292 greift in eine unbeweglich mit dem oberen Teleskopglied 246 des Teleskoparms 234 verbundene Zahnstange 296 ein und ist im oberen Bereich des mittleren Teleskopglieds 254 angeordnet. Das Koppelritzel 294 ist dagegen im unteren Bereich des mittleren Teleskopglieds 254 angeordnet; die Verzahnung des daran angebrachten Stirnrades greift in eine unbeweglich mit dem Schlitten 256 des Teleskoparms 234 verbundene Zahnstange 298 ein. Dazu erstreckt sich das nicht zu erkennende Stirnrad am Koppelritzel 294 durch eine Seitenwand des mittleren Teleskopglieds 254 hindurch.

Wird nun der Stellmotor 274 derart von der Steuereinrichtung 232 des Transportwagens 208 angesteuert, dass sich das Antriebsritzel 276 in Figur 9A entgegen dem Uhrzeigersinn verdreht, so werden auch die Koppelritzel 292 und 294 entgegen dem Uhrzeigersinn verdreht. Durch den Eingriff der daran befestigten Stirnräder in die Zahnstangen 296 bzw. 298 wird dabei das mittlere Teleskopglied 254 des Teleskoparms 234 aus dem oberen Teleskopglied 246 und gleichzeitig der Schlitten 256 aus dem mittleren Teleskopglied 254 heraus geschoben.

Wird das Kettenritzel 276 im Uhrzeigersinn verdreht, so wird der Schlitten 256 in das mittlere Teleskopglied 254 und gleichzeitig dieses in das obere Teleskopglied 246 eingefahren.

Bei hier nicht gezeigten Abwandlungen kann die Hub-/Senkbewegung der Teleskopglieder 246 und 254 und des Schlittens 256 auch durch eine Schubkette oder ähnliche Vorrichtungen bewirkt werden.

Die Funktionsweise der oben beschriebenen kataphoretischen Tauchlackieranlage 200 ist folgende:
Die zu lackierenden Fahrzeugkarosserien 204 werden in Figur 1 in im Wesentlichen horizontaler Ausrichtung (vgl. Pfeil 220) von einer Vorbehandlungsstation zugeführt, in welcher die Fahrzeugkarosserien 204 in bekannter Weise durch Reinigen, Entfetten usw. auf den Lackiervorgang vorbereitet werden.

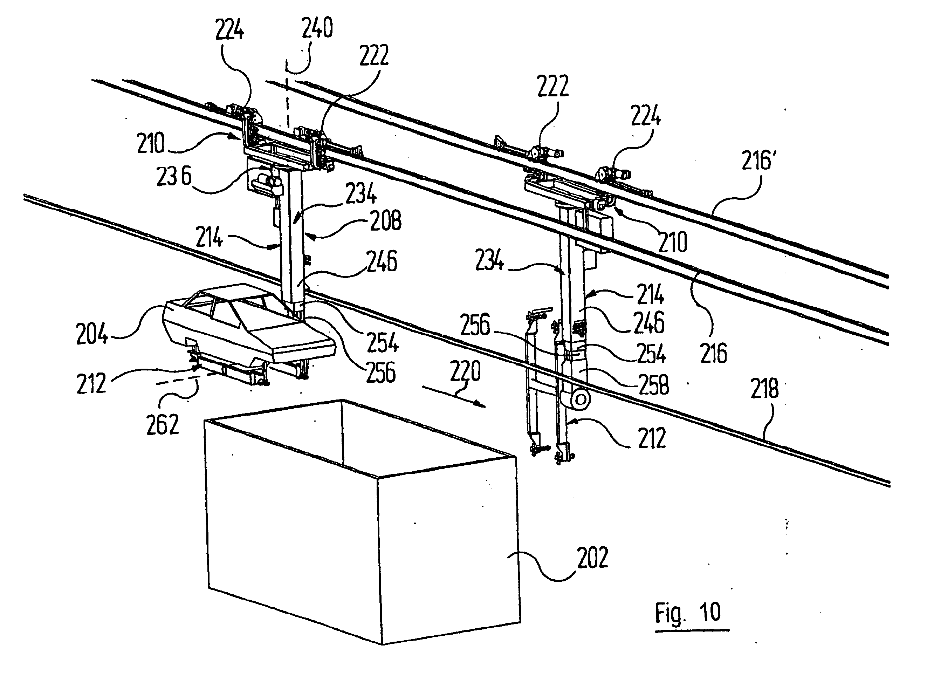

Der Schlitten 256 ist dabei in seine oberste Position verfahren, in welcher die Teleskopglieder 256, 254 und 256 des Teleskoparms 234 ineinander gefahren sind, so dass letzterer seine geringstmögliche Länge aufweist. Die entsprechende Position ist perspektivisch in Figur 10 zu erkennen. Der Antriebswagen 210 des entsprechenden Transportwagens 208 wird mit Hilfe der Elektromotoren 226 und 228 entlang der Antriebsschiene 216 auf das Tauchbecken 202 zugeführt, wobei der zugehörige Tragwagen 212 über die Teleskopeinrichtung 214 mitgeführt wird. Dabei läuft die Führungsrolle 250 am oberen Teleskopglied 246 des Teleskoparms 234 in dem U-Profil der Führungsschiene 218, was jedoch nicht der Gewichtsaufnahme dient. Das Gewicht des Transportwagens 208 und der daran befestigten Fahrzeugkarosserie 204 wird über den Antriebswagen 210 vollständig von der Antriebsschiene 216 getragen.

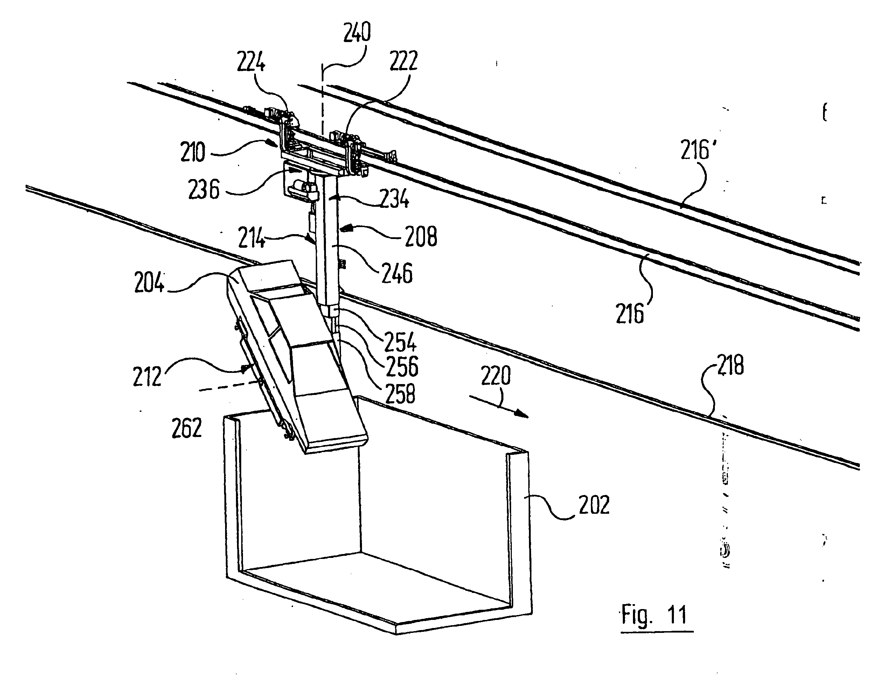

Wenn sich der Transportwagen 208 der auf der Eintrittsseite befindlichen Stirnwand des Tauchbeckens 202 nähert, wird der Schlitten 256, welcher die Fahrzeugkarosserie 204 über den Transportwagen 208 trägt, progressiv abgesenkt, indem mit Hilfe des Stellmotors 274 der Teleskoparm 234 in oben beschriebener Weise ausgefahren wird. Sobald die Front der Fahrzeugkarosserie 204 über die Stirnwand des Tauchbeckens 202 hinaus ins Innere des Tauchbeckens 202 ragt, wird gleichzeitig mit Hilfe des Getriebemotors 264 der Drehzapfen 260 und damit der Tragwagen 212 mit den Befestigungsmitteln 272 und daran befestigter Fahrzeugkarosserie 204 um die Drehachse 262 verdreht. In diesem Bereich ist also die Gesamtbewegung der Fahrzeugkarosserie 204 als Überlagerung dreier Bewegungen zu verstehen, nämlich einer horizontalen Linearbewegung (Pfeil 220) entlang der Antriebsschiene 216, einer vertikalen Linearbewegung entlang der Drehachse 240 und damit auch entlang der Längsachse des Teleskoparms 234 und einer Drehbewegung um die Drehachse 262 des Drehzapfens 260, die in der Sicht der Figur 1 im Uhrzeigersinn erfolgt. Dabei "wickelt" sich die Fahrzeugkarosserie 204 über die eingangsseitige Stirnwand des Tauchbeckens 202. Die entsprechende Position ist perspektivisch in Figur 11 dargestellt.

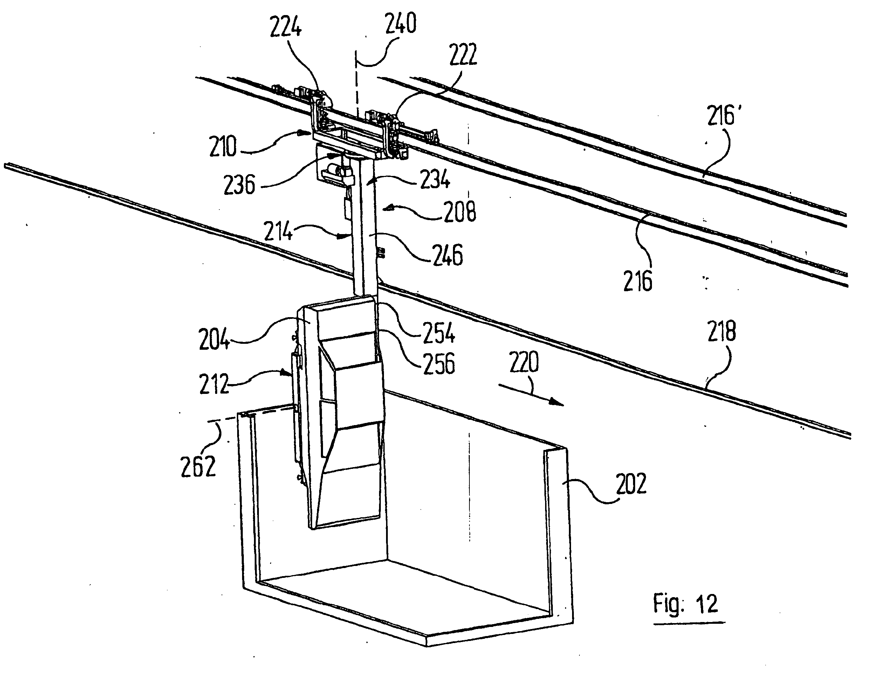

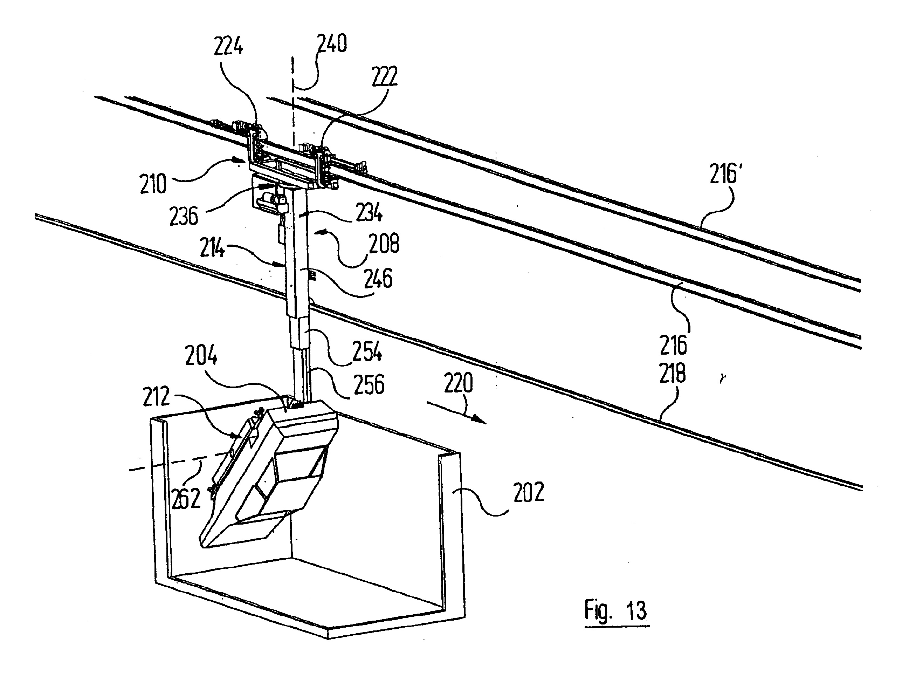

Unter fortgesetztem Absenken des Schlittens 256 und fortgesetzter Drehung der Fahrzeugkarosserie 204 um die Drehachse 262 des Drehzapfens 260 wird schließlich eine Position erreicht, in welcher die Fahrzeugkarosserie 204 im Wesentlichen senkrecht steht, wie dies in Figur 12 dargestellt ist. Dabei befindet sich die Fahrzeugkarosserie 204 noch verhältnismäßig nahe an der eingangsseitigen Stirnwand des Tauchbeckens 202. In dem Ausmaß, in dem sich der Transportwagen 208 weiter bewegt und damit der Abstand zwischen der Mitte der Fahrzeugkarosserie 204 und der eingangsseitigen Stirnwand des Tauchbeckens 202 wächst, wird der Drehzapfen 260 und damit die Fahrzeugkarosserie 204 weiter im Uhrzeigersinn verdreht, so dass sich die Fahrzeugkarosserie 204 auf den Rücken zu legen beginnt, was in Figur 13 dargestellt ist. Die Bewegungsgeschwindigkeit in horizontaler Richtung und die Drehgeschwindigkeit können dabei so aufeinander abgestimmt werden, dass die Front der Fahrzeugkarosserie 204 bei dieser Eintauchbewegung etwa denselben Abstand von der eingansseitigen Stirnseite des Tauchbeckens 202 behält.

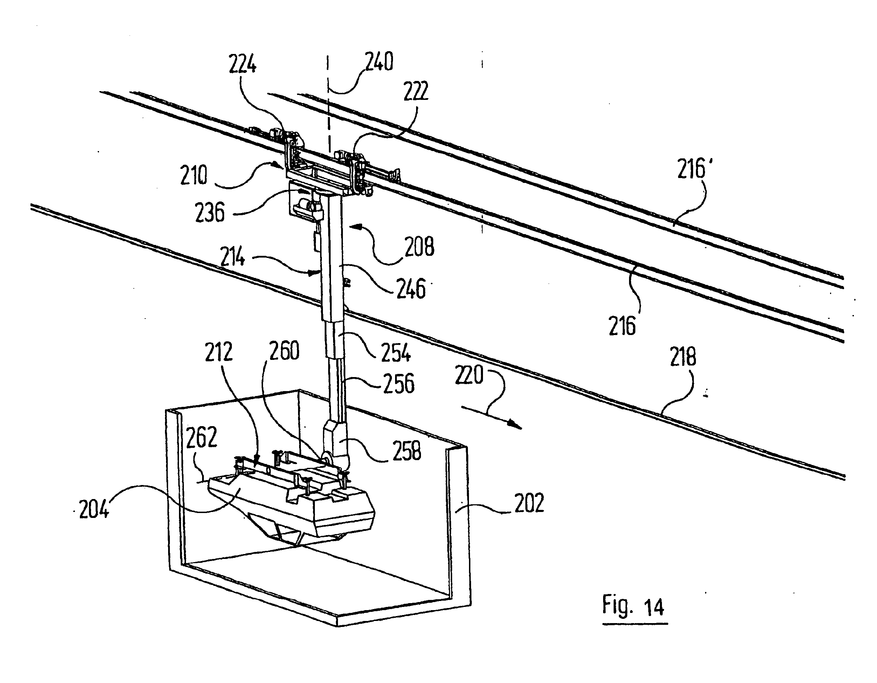

Spätestens in dem Moment, in dem die Fahrzeugkarosserie 204 vollständig "auf dem Rücken" und damit wieder horizontal liegt und der in Figur 14 dargestellt ist, ist die Fahrzeugkarosserie 204 vollständig in den flüssigen Lack eingetaucht. Die Fahrzeugkarosserie 204 wird zunächst in dieser Position mit Hilfe des Transportwagens 208 weiter durch das Tauchbecken 202 gefördert, bis sie näher an die ausgangsseitige Stirnwand des Tauchbeckens 202 herangerückt ist.

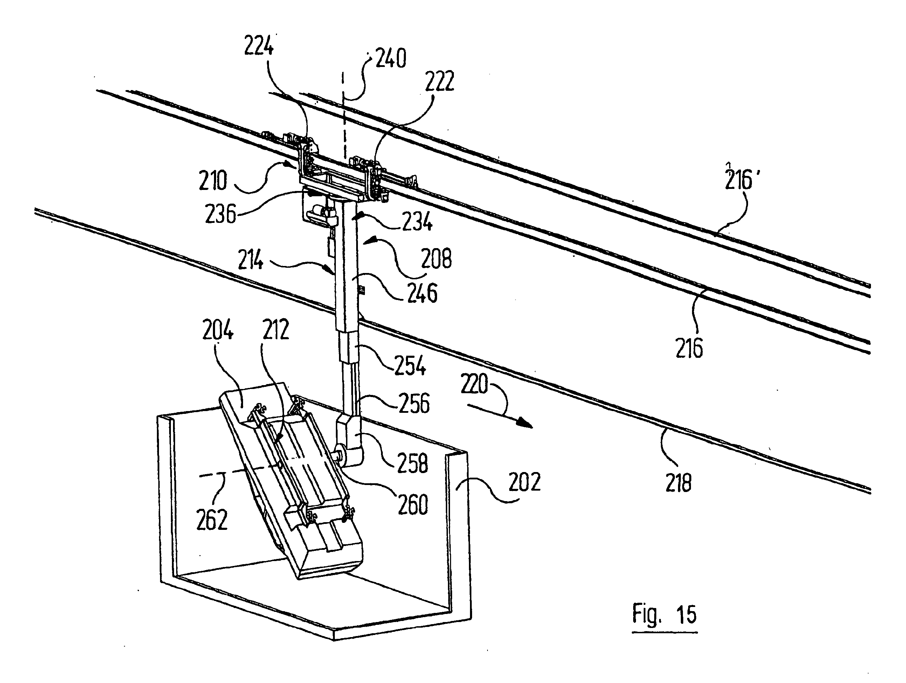

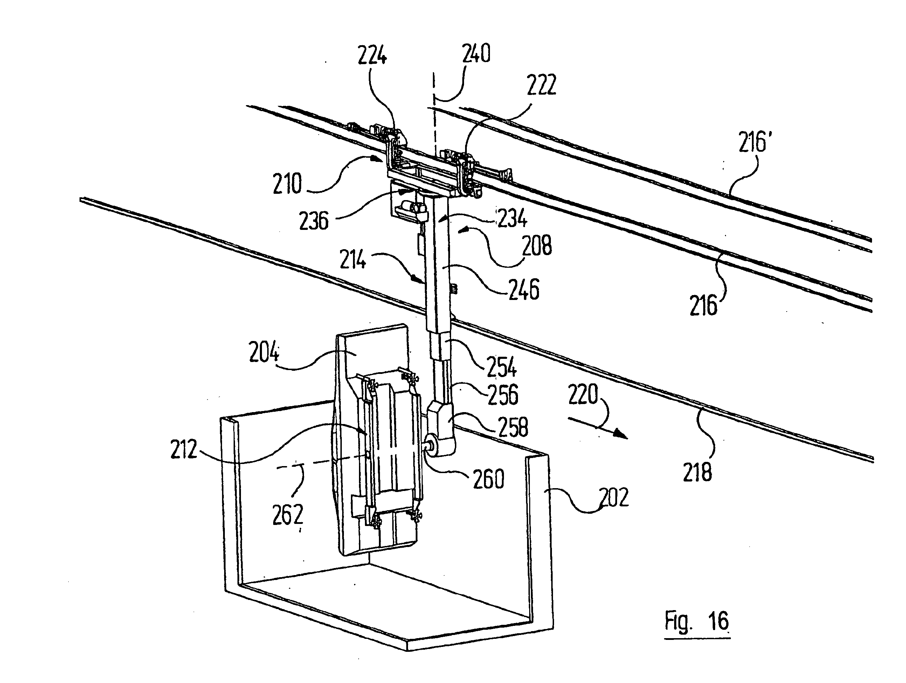

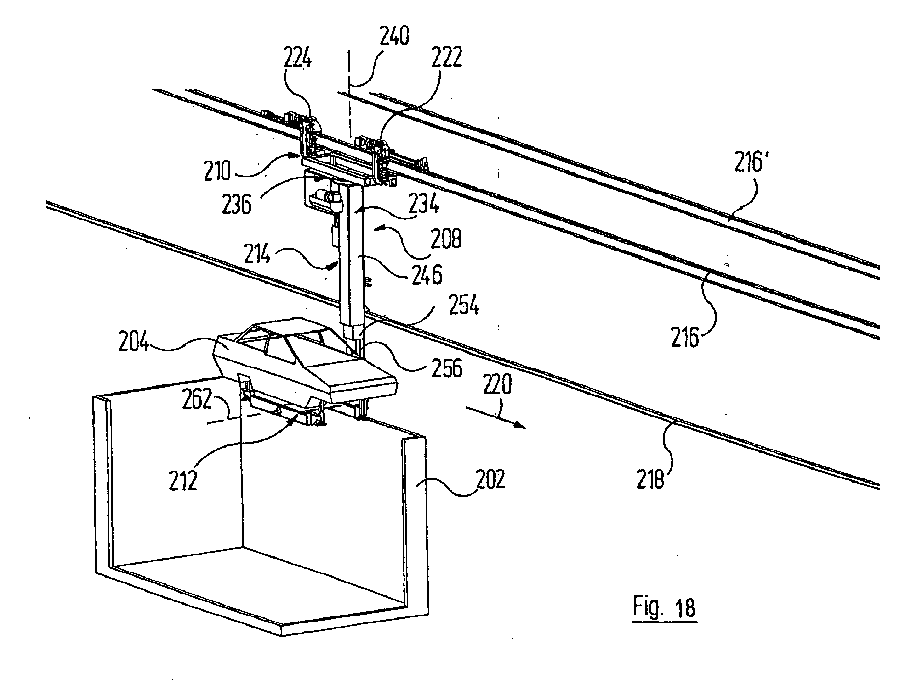

Sodann beginnt der Austauchvorgang der Fahrzeugkarosserie 204. Dieser stellt sich wiederum als Überlagerung von drei Bewegungen dar, nämlich der horizontalen Linearbewegung in Förderrichtung 220, der Vertikalbewegung entlang der Drehachse 240 und damit auch entlang der Längsachse des Teleskoparms 234 und der Drehbewegung um die Drehachse 262 des Drehzapfens 260. Zunächst wird die Fahrzeugkarosserie 204 durch Weiterverdrehen des Drehzapfens 260 im Uhrzeigersinn vertikal gestellt, was in den Figuren 15 und 16 dargestellt ist. Sodann "wickelt" sich die Fahrzeugkarosserie 204 unter Einfahren des Teleskoparms 234 und damit unter einer Aufwärtsbewegung des Schlittens 256 und Fortsetzung der Drehbewegung über die ausgangsseitige Stirnwand des Tauchbeckens 202 weg (vgl. Figur 7), bis dann erneut in Förderrichtung 220 hinter dem Tauchbecken 202 eine horizontale Position der frisch lackierten Fahrzeugkarosserie 204 erreicht ist, welche in Figur 18 gezeigt ist.

Die beschriebene Tauchlackieranlage 200 kann auch zum Tauchlackieren kleinerer Gegenstände (Kleingüter) verwendet werden. Dazu können beispielsweise nicht eigens gezeigte Haltekörbe an den Tragwagen 212 befestigt werden, welche nicht dargestellte kleinteilige, zu lackierende Gegenstände beispielsweise in loser Schüttung enthalten. Es versteht sich, dass solche Haltekörbe nicht in einer Position durch das Tauchbecken 202 geführt werden, in welcher ihre Beschickungsöffnung nach unten weist und zu beschichtende Gegenstände herausfallen könnten.

Wie oben erläutert, kann der Teleskoparm 234 über den Stellmotor 242 um die vertikale Drehachse 240 verdreht werden. Bei der in den Figuren 1 und 10 bis 18 gezeigten Kinematik nimmt der Teleskoparm 234 im Hinblick auf seine vertikale Drehachse 240 eine Stellung ein, bei welcher der Drehzapfen 260 am Schlitten 256 derart ausgerichtet ist, dass seine horizontale Drehachse 262 senkrecht auf die Bewegungsrichtung 220 steht. Der Teleskoparm 234 wird durch eine entsprechende Arretierung des Stellmotors 242 in dieser Stellung gehalten.

Die Verdrehbarkeit des Teleskoparms 234 um die vertikale Drehachse 240 kommt bei der in den Figuren 1 und 10 bis 18 gezeigten Kinematik erst zu tragen, wenn die Fahrzeugkarosserien 204 das Tauchbecken 202 verlassen haben und von den Transportwagen 208 zur weiteren Bearbeitung abgenommen sind. Die Transportwagen 208 müssen dann wieder zum Eingang der Tauchlackieranlage 200 zurückgeführt werden, damit sie dort erneut mit noch zu lackierenden Fahrzeugkarosserien 204 beladen werden können. Hierzu wird der Tragwagen 212 gegenüber dem Verbindungsrahmen 230 des Antriebswagens 210 um die vertikale Drehachse 240 verdreht, bis der Drehzapfen 260 am Schlitten 256 parallel zur Bewegungsrichtung 220 ausgerichtet ist, indem der Stellmotor 242 betätigt und darüber das Zahnrad 236 am oberen Teleskopglied 246 des Teleskoparms 234 verdreht wird. Zudem wird der Tragwagen 212 durch eine entsprechende Drehung des Drehzapfens 260 über den Getriebemotor 264 in eine Stellung gebracht, in welcher seine Längsholme 266 und 268 vertikal stehen. Diese Stellung ist in den Figuren 2 und 3 gezeigt. In Figur 10 ist ein Transportwagen 208 zu erkennen, der in dieser "Rückführstellung" auf einer Antriebsschiene 216', welche parallel zur Antriebsschiene 216 läuft und über ein nicht zu erkennendes Schienenkurvenstück mit dieser verbunden ist, zum Eingang der Tauchlackieranlage 200 zurückgeführt wird.

Die Übergabe des Transportwagens 208 von der Antriebsschiene 216 auf die Antriebsschiene 216' kann auch mittels einer Querverschiebung erfolgen, ohne dass dazu ein die Antriebsschienen 216, 216' verbindendes Schienenkurvenstück nötig wäre.

Durch die Drehung des Tragwagens 212 und dessen Vertikalstellung gegenüber dem Antriebswagen 210 wird der Platzbedarf für den Transportwagen 208 auf dem Rückweg vom Ausgang der Tauchlackieranlage 200 zu deren Eingang verringert.

Der oben anhand der Figuren 10 bis 18 geschilderte Bewegungsablauf der Fahrzeugkarosserie 204 beim Durchgang durch das Tauchbecken 202 ist nur beispielhaft. Die konstruktive Ausgestaltung des Transportwagens 208 lässt eine Vielzahl anderer Kinematiken zu, die jeweils an die Art der Fahrzeugkarosserie 3 angepasst werden können. Beispielsweise kann die Fahrzeugkarosserie 204 auf "Dach oben" durch das Tauchbecken 202 geführt werden.

Alternativ ist es möglich, dass die Drehachse 262 des Tragwagens 212 knapp über dem Flüssigkeitsspiegel der im Tauchbad 202 befindlichen Badflüssigkeit geführt wird. In diesem Fall wird die Fahrzeugkarosserie "Dach unten" durch das Tauchbecken 202 geführt. Dabei kann erreicht werden, dass weder der Tragwagen 212 noch der Schlitten 256 mit Badflüssigkeit in Kontakt kommen, wodurch die Gefahr verringert ist, Badflüssigkeit von einem Tauchbad ins nächste Tauchbad zu verschleppen und Schmiermittel in die Tauchbäder einzutragen.

Es ist beispielsweise auch möglich, den durch die vertikale Drehachse 240 vorgegebenen weiteren Freiheitsgrad zu nutzen, wenn die Fahrzeugkarosserie 204 durch das Tauchbecken 202 geführt wird. So kann eine Fahrzeugkarosserie 204 bei entsprechenden Abmessungen des Tauchbeckens 202 auch quer durch dieses geführt werden und nicht in Längsrichtung, wie es in den Figuren 10 bis 18 veranschaulicht ist. Auch kann der Teleskoparm 234 so weit um die vertikale Drehachse 240 gedreht werden, dass der Drehzapfen 260 bzw. dessen Drehachse 262 mit der Bewegungsrichtung 220 einen Winkel zwischen 0 und 90° einschließt. Auch kann der Teleskoparm 234 um die vertikale Drehachse 240 hin- und hergedreht werden, während die Fahrzeugkarosserie 204 durch das Tauchbecken 202 geführt wird, wodurch eine "Schlingerbewegung" der Fahrzeugkarosserie 204 im Tauchbecken 202 erzielt werden kann.

Für die Fahrzeugkarosserie 204 kann somit ein Bewegungsablauf erzielt werden, der als Überlagerung von vier Bewegungen verstanden werden kann, nämlich einer horizontalen Linearbewegung (entsprechend der Bewegungsrichtung 220), einer vertikalen Linearbewegung entlang der Drehachse 240 und damit entlang der Längsachse des Teleskoparms 234, einer Drehbewegung um die horizontale Drehachse 262 des Drehzapfens 260 und einer Drehbewegung um die vertikale Drehachse 240 des Teleskoparms 234.

Das als Hängebahnsystem ausgebildete Fördersystem 206 erfordert keine weiteren Aufbauten rechts und/oder links des Tauchbeckens 202, wie sie bei anders konzipierten Anlagen notwendig sind. Dadurch kann die Tauchlackieranlage 200 insgesamt verhältnismäßig schmal gehalten werden.

Durch die seitliche Lagerung des Tragwagens 212 gibt es darüber hinaus keine Abschattungen der Fahrzeugkarosserie 204 durch weitere Bauteile des Transportwagens 208, die im Tauchbad entsprechend aufwändig durch eine geeignete Kinematik und/oder eine längere Verweilzeit im Tauchbad kompensiert werden müssten.

Beim Führen der Fahrzeugkarosserie 204 durch das Tauchbad wird der untere Endbereich 258 des Schlittens 256, welcher den horizontalen Drehzapfen 262 trägt, in die Badflüssigkeit abgesenkt. Dadurch kann die horizontale Drehachse 260 nahe dem Schwerpunkt der von dem Tragwagen 212 aufgenommenen Fahrzeugkarosserie 204 angeordnet sein. Dies führt zu einer günstigeren Kraftverteilung beim Bewegungsablauf für die Fahrzeugkarosserie als es bei bekannten Systemen der Fall ist, bei denen die Drehachse verhältnismäßig weit vom Schwerpunkt der Fahrzeugkarosserie abliegt.

## Patentansprüche

1. Hängebahnsystem zum Transport von Gegenständen, insbesondere zum Transport von Fahrzeugkarosserien, in einer Behandlungsanlage mit
a) mindestens einem Transportwagen (208), welcher eine Befestigungseinrichtung (212, 272) umfasst, an welcher wenigstens ein Gegenstand (204) befestigbar ist;
b) mindestens einer den Transportwagen (208) tragenden Schiene (216);
c) mindestens einem Antriebsmittel (222, 224) zum Verfahren des Transportwagens (208) entlang der Schiene (216);
wobei
d) die Befestigungseinrichtung (212, 272) stets unterhalb der Schiene (216) angeordnet ist;
e) der Transportwagen (208) derart eingerichtet ist, dass die Befestigungseinrichtung (212, 272) wenigstens entlang eines Abschnitts der Schiene (216) seitlich gegenüber der Schiene (216) versetzt förderbar ist;
f) die Befestigungseinrichtung (212, 272) eine Tragstruktur (212) mit Befestigungsmitteln (272) umfasst, welche lediglich über eine Seitenfläche von einem weiteren Bauteil (256) des Transportwagens (208) getragen ist, **dadurch gekennzeichnet, dass**
g) die Tragstruktur (212) über einen antreibbaren Drehzapfen (260) um eine horizontale Drehachse (262) verdrehbar an dem weiteren Bauteil (256) des Transportwagens (208) gelagert ist.

2. Hängebahnsystem nach Anspruch 1, **dadurch gekennzeichnet, dass** das weitere Bauteil (256) des Transportwagens (208), welches die Tragstruktur (212) trägt, ein vertikal verfahrbarer Schlitten (256) ist.

3. Hängebahnsystem nach Anspruch 2, **dadurch gekennzeichnet, dass** der Schlitten (256) mittels einer in vertikaler Richtung ein- oder ausfahrbaren Teleskopeinrichtung (214) vertikal verfahrbar ist.

4. Hängebahnsystem nach einem der Ansprüche 1 bis 3, **dadurch gekennzeichnet, dass** die Befestigungseinrichtung (212, 272) um eine vertikale Drehachse (240) verdrehbar gelagert ist.

5. Hängebahnsystem nach einem der Ansprüche 1 bis 4, **dadurch gekennzeichnet, dass** der Transportwagen (208) als Antriebsmittel (210) einen an der Schiene (216) motorisch verfahrbaren Antriebswagen (210) umfasst.

6. Hängebahnsystem nach Anspruch 5 unter Rückbezug auf Anspruch 4, **dadurch gekennzeichnet, dass** die Teleskopeinrichtung (214) um die vertikale Drehachse (240) verdrehbar an dem Antriebswagen (210) des Transportwagens (208) gelagert ist.

7. Hängebahnsystem nach einem der Ansprüche 1 bis 6, **dadurch gekennzeichnet, dass** Sicherungsmittel (218, 248, 250) vorgesehen sind, welche den Transportwagen (208) gegen ein Verkippen um eine zur Schiene (216) parallele Kippachse sichern.

8. Hängebahnsystem nach Anspruch 7, **dadurch gekennzeichnet, dass** die Sicherungsmittel (218, 248, 250) eine parallel zur und unterhalb der Schiene (216) angeordnete Stützstruktur (218) umfassen, an welcher sich der Tragwagen (208) abstützt.

9. Hängebahnsystem nach Anspruch 8, **dadurch gekennzeichnet, dass** die Sicherungsmittel (218, 248, 250) eine am Transportwagen (208) angebrachte, um eine vertikale Drehachse verdrehbare Führungsrolle (250) umfassen, welche in einer dazu komplementären Führungsschiene (218) geführt ist, wobei die Führungsschiene (218) unterhalb der Antriebsschiene (216) parallel zu dieser verläuft.

10. Tauchbehandlungsanlage mit
a) mindestens einem Tauchbecken (202), welches mit einer Behandlungsflüssigkeit füllbar ist, in welcher zu behandelnde Gegenstände (204), insbesondere Fahrzeugkarosserien, eingetaucht werden können;
b) einer Förderanlage (206), welche die zu behandelnden Gegenstände (204) an das Tauchbecken (202) heran, in den Innenraum des Tauchbeckens (202) hinein, aus dem Tauchbecken (202) heraus und von diesem wegbewegen kann,
**dadurch gekennzeichnet, dass**
c) die Förderanlage (206) das Hängebahnsystem (206) nach einem der Ansprüche 1 bis 9 ist.

## Claims

1. An overhead conveyor system for transporting objects, in particular for transporting vehicle bodies, in a treatment plant, having:
a) at least one transport carriage (208) which includes a securing device (212, 272) to which at least one object (204) may be secured;
b) at least one rail (216) carrying the transport carriage (208);
c) at least one drive means (222, 224) for moving the transport carriage (208) along the rail (216);
wherein
d) the securing device (212, 272) is always arranged below the rail (216),
e) the transport carriage (208) is configured such that the securing device (212, 272) may be conveyed laterally offset from the rail (216), at least along a section of the rail (216).
f) the securing device (212, 272) includes a holding structure (212) with securing means (272) which is carried only by way of a side surface of a further component (256) of the transport carriage (208),
**characterised in that**
g) the holding structure (212) is mounted on the further component (256) of the transport carriage (208) such that it is rotatable about a horizontal axis of rotation (262) by means of a driveable rotary peg (260).

2. An overhead conveyor system according to Claim 1, **characterised in that** the further component (256) of the transport carriage (208), which holds the holding structure (212), is a vertically movable slide (256).

3. An overhead conveyor system according to Claim 2, **characterised in that** the slide (256) is vertically movable by means of a telescopic device (214) which may be retracted or extended in the vertical direction.

4. An overhead conveyor system according to one of Claims 1 to 3, **characterised in that** the securing device (212, 272) is mounted such that it is rotatable about a vertical axis of rotation (240).

5. An overhead conveyor system according to one of Claims 1 to 4, **characterised in that** the transport carriage (208) includes as the drive means (210) a drive carriage (210) which may be moved by motor on the rail (216).

6. An overhead conveyor system according to Claim 5 with reference back to Claim 4, **characterised in that** the telescopic device (214) is mounted on the drive carriage (210) of the transport carriage (208) such that it is rotatable about the vertical axis of rotation (240).

7. An overhead conveyor system according to one of Claims 1 to 6, **characterised in that** securing means (218, 248, 250) are provided which secure the transport carriage (208) to prevent tipping about a tilt axis parallel to the rail (216).

8. An overhead conveyor system according to Claim 7, **characterised in that** the securing means (218, 248, 250) include a support structure (218) which is arranged parallel to and below the rail (216) and which supports the holding carriage (208).

9. An overhead conveyor system according to Claim 8, **characterised in that** the securing means (218, 248, 250) include a guide roller (250) which is mounted on the transport carriage (208), is rotatable about a vertical axis of rotation and is guided in a guide rail (218) that is complementary thereto, with the guide rail (218) running below the drive rail (216) and parallel thereto.

10. A dip treatment plant, having:
a) at least one dip bath (202) which can be filled with a treatment liquid and into which objects (204) to be treated, in particular vehicle bodies, can be dipped;
b) a conveying plant (206) which can bring the objects (204) to be treated to the dip bath (202), put them into the interior of the dip bath (202), take them out of the dip bath (202) and move them away therefrom,
**characterised in that**
c) the conveying plant (206) is the overhead conveyor system (206) according to one of Claims 1 to 9.

## Revendications

1. Système de convoyage en suspension dévolu au transport d'objets, notamment au transport de carrosseries de véhicules dans une installation de traitement, comprenant
a) au moins un chariot de transport (208), muni d'un dispositif de fixation (212, 272) auquel au moins un objet (204) peut être fixé ;
b) au moins un rail (216) portant ledit chariot de transport (208) ;
c) au moins un moyen d'entraînement (222, 224), affecté au déplacement dudit chariot de transport (208) le long dudit rail (216) ;
sachant que
d) ledit dispositif de fixation (212, 272) est placé, en permanence, au-dessous dudit rail (216) ;
e) ledit chariot de transport (208) est agencé de façon telle que ledit dispositif de fixation (212, 272) puisse être acheminé avec décalage latéral vis-à-vis du rail (216), au moins le long d'un tronçon dudit rail (216) ;
f) ledit dispositif de fixation (212, 272) inclut une structure de support (212) pourvue de moyens de fixation (272) et portée, uniquement par l'intermédiaire d'une surface latérale, par un élément structurel supplémentaire (256) dudit chariot de transport (208),
**caractérisé par le fait que**
g) la structure de support (212) est montée rotative sur l'élément structurel supplémentaire (256) du chariot de transport (208), autour d'un axe horizontal de rotation (262), par l'intermédiaire d'un tourillon (260) pouvant être entraîné.

2. Système de convoyage en suspension selon la revendication 1, **caractérisé par le fait que** l'élément structurel supplémentaire (256) du chariot de transport (208), qui porte la structure de support (212), se présente comme une pièce coulissante (256) pouvant être déplacée verticalement.

3. Système de convoyage en suspension selon la revendication 2, **caractérisé par le fait que** la pièce coulissante (256) peut être déplacée verticalement au moyen d'un dispositif télescopique (214) pouvant être rétracté et déployé dans le sens vertical.

4. Système de convoyage en suspension selon l'une des revendications 1 à 3, **caractérisé par le fait que** le dispositif de fixation (212, 272) est monté rotatif autour d'un axe vertical de rotation (240).

5. Système de convoyage en suspension selon l'une des revendications 1 à 4, **caractérisé par le fait que** le chariot de transport (208) présente, en tant que moyen d'entraînement (210), un chariot d'entraînement (210) apte au déplacement motorisé sur le rail (216).

6. Système de convoyage en suspension selon la revendication 5 rattachée à la revendication 4, **caractérisé par le fait que** le dispositif télescopique (214) est monté rotatif, autour de l'axe vertical de rotation (240), sur le chariot d'entraînement (210) du chariot de transport (208).

7. Système de convoyage en suspension selon l'une des revendications 1 à 6, **caractérisé par** la présence de moyens de sûreté (218, 248, 250), qui préviennent un basculement du chariot de transport (208) autour d'un axe de culbute parallèle au rail (216).

8. Système de convoyage en suspension selon la revendication 7, **caractérisé par le fait que** les moyens de sûreté (218, 248, 250) comprennent une structure de soutien (218) disposée parallèlement au rail (216), au-dessous de ce dernier, et sur laquelle le chariot de transport (208) prend appui.

9. Système de convoyage en suspension selon la revendication 8, **caractérisé par le fait que** les moyens de sûreté (218, 248, 250) comprennent un rouleau de guidage (250) implanté sur le chariot de transport (208), apte à tourner autour d'un axe vertical de rotation et guidé dans une glissière de guidage (218) à profil complémentaire, ladite glissière de guidage (218) s'étendant au-dessous du rail d'entraînement (216), parallèlement à celui-ci.

10. Installation de traitement par immersion, comprenant
a) au moins une cuve d'immersion (202) pouvant être emplie d'un fluide de traitement dans lequel peuvent être plongés des objets (204) devant être traités et revêtant, en particulier, la forme de carrosseries de véhicules ;
b) une installation de convoyage (206) par laquelle lesdits objets (204), devant être traités, peuvent être présentés à la cuve d'immersion (202), introduits dans l'espace interne de ladite cuve d'immersion (202), extraits de ladite cuve d'immersion (202), puis éloignés de cette dernière,
**caractérisée par le fait que**
c) l'installation de convoyage (206) se présente comme le système (206) de convoyage en suspension conforme à l'une des revendications 1 à 9.
